(19) Europäisches Patentamt
European Patent Office
Office européen des brevets

(11) EP 0 649 724 B1

(12) EUROPÄISCHE PATENTSCHRIFT

(45) Veröffentlichungstag und Bekanntmachung des Hinweises auf die Patenterteilung:
**10.03.1999 Patentblatt 1999/10**

(51) Int. Cl.[6]: **B29C 47/06**, B29C 47/00, C08K 5/3475, C08G 64/14

(21) Anmeldenummer: **94115644.0**

(22) Anmeldetag: **05.10.1994**

(54) **Verfahren zur Herstellung von mehrschichtigen Kunststofftafeln**
Method of making multilayered plastic plates
Procédé pour la fabrication de panneaux multicouches en plastique

(84) Benannte Vertragsstaaten:
**BE DE ES FR IT NL**

(30) Priorität: **18.10.1993 DE 4335440**

(43) Veröffentlichungstag der Anmeldung:
**26.04.1995 Patentblatt 1995/17**

(73) Patentinhaber: **BAYER AG**
**51368 Leverkusen (DE)**

(72) Erfinder:
- **Kühling, Dr. Steffen**
**D-40670 Meerbusch (DE)**
- **Löwer, Dr. Hartmut**
**D-47802 Krefeld (DE)**
- **Anders, Dr. Siegfried**
**D-51147 Köln (DE)**
- **Kirsch, Dr. Jürgen**
**D-51375 Leverkusen (DE)**
- **Verhoeven, Dr. Werner**
**B-2920 Kalmthout (BE)**

(56) Entgegenhaltungen:
**EP-A- 0 110 221**
**EP-A- 0 247 480**
**EP-A- 0 320 632**
**EP-A- 0 359 622**
**EP-A- 0 494 601**
**US-A- 4 185 009**
**US-A- 4 812 498**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 649 724 B1

## Beschreibung

Gegenstand der vorliegenden Erfindung ist ein Verfahren zur Herstellung von mehrschichtigen Kunststofftafeln durch Coextrusion von verzweigten Si-freien Polycarbonaten aus 2,2-Bis-(4-hydroxy-phenyl)-propan, bestehend aus einer Kernschicht und mindestens einer Deckschicht mit einem Gehalt von 1 Gew.-% bis 15 Gew.-%, vorzugsweise 1 Gew.-% bis 8 Gew.-%, an UV-Absorbern, dadurch gekennzeichnet, daß das verzweigte Polycarbonat ein $\overline{M}_w$ von 27 000 bis 29 500, vorzugsweise von 28 000 bis 29 000 hat.

Die kennzeichnenden $\overline{M}_w$'s entsprechen relativen Viskositäten (gemessen bei 25°C in 0,5 %iger Lösung in $CH_2Cl_2$) zwischen 1,27 bis 1,295 bzw. zwischen 1,28 und 1,29.

Die Messung der $\overline{M}_w$'s kann auch unabhängig von der Bestimmung über die relative Viskosität durch Messung des Molekulargewichts mittels Lichtstreuung erfolgen.

Aus der EP-OS 0 247 480 sind derartige Kunststofftafeln bekannt, wobei das verzweigte Polycarbonat vorzugsweise ein $\overline{M}_w$ von 20 000 bis 40 000 hat.

Beispielhaft wird ein verzweigtes Polycarbonat eingesetzt, das ein $\eta_{rel}$ von 1.32 (gemessen bei 25°C in 0,5 %iger Lösung in $CH_2Cl_2$) hat, was einem $\overline{M}_w$ von 32 000 entspricht.

Im Prüfungsverfahren für obige EP-OS 0 247 480 wurden darüber hinaus Mehrschichtkunststofftafeln aus verzweigtem Polycarbonat mit einem $\overline{M}_w$ von 30 000 und einem $\eta_{rel}$ von 1.31 als Beispiele nachgereicht (Eingabe vom 19.08.1992).

Gemäß US-PS 5 108 835 sind ebenfalls mehrschichtige Kunststofftafeln bekannt, wobei allerdings nur die Kernschicht verzweigtes Polycarbonat enthält (siehe Beispiel II.2.3, Spalte 11 der US-PS 5 108 835). Das eingesetzte verzweigte Polycarbonat hat wiederum ein $\overline{M}_w$ von 30 000 und ein $\eta_{rel}$ von 1.31 (Beispiel I.2, Spalte 10 der US-PS 5 108 835).

Gemäß EP-320 632 sind ebenfalls mehrschichtige Kunststofftafeln aus verzweigten Polycarbonaten bekannt (siehe beispielsweise Seite 4, Tabelle der EP-320 632).

Allgemeine Molekulargewichtsangaben von 10 000 bis 200 000 sind allerdings nur für die Polydiorganosiloxan-Polycarbonat-Blockcopolymeren angegeben (Seite 6, Zeilen 42/43 der EP-320 632). Das beispielhaft verwendete Polycarbonat hat ein $\eta_{rel}$ von 1.31.

Aus der DE-OS 3 414 116 bzw. der US-PS 4 600 632 sind UV-stabilisierte Polycarbonatformkörper bekannt, die jedoch aus Polydiorganosiloxan-Polycarbonat-Blockcopolymeren aufgebaut sind.

Aus der US-PS 5 137 949 sind Mehrschichtkunststofftafeln bekannt, deren UV-Absorber-haltige Schichten aus Polydiorganosiloxan-Polycarbonat-Blockcopolymeren bestehen.

Aus der EP-416 404 sind UV-stabilisierte, verzweigte Polycarbonate aus speziellen Diphenolen bekannt (Seite 7, Zeilen 14-21 der EP und Seite 11, letzter Absatz der EP). Erwähnt wird (Seite 13, Zeile 17), daß derartige Polycarbonate zur Herstellung von Platten bzw. von Stegmehrfachplatten eingesetzt werden können.

Es wurde nun gefunden, daß ab einem mittleren Molekulargewicht $\overline{M}_w$ <30 000 die UV-Absorberausdampfung abnimmt und somit beim Einhalten eines gewissen Molekulargewichtsbereichs des verzweigten Polycarbonats die UV-Absorberausdampfung auch bei längerer Coextrusion von Mehrschichtplatten bei Erhalt der guten mechanischen Eigenschaften der resultierenden Platte vernachlässigbar wird. Dies wird durch die Auswahl des anspruchsgemäßen Molekulargewichtsbereichs erreicht.

Dies wird durch die beiden Abbildungen deutlich.

Darüber hinaus muß man berücksichtigen, daß zu niedrige Molekulargewichte der verzweigten Polycarbonate, also etwa <25 000 zu niedrige Schmelzstandfestigkeiten für einen Teil der Plattenanwendung mitbringen.

Erfindungsgemäß geeignete Si-freie Polycarbonate sind die in bekannter Weise aus Bisphenol-A, Carbonatspendern, Verzweigern und Kettenabbrechern erhältlichen Polymeren, die vorzugsweise in der Schmelze mit Diphenylcarbonat oder nach dem Zweiphasengrenzflächenverfahren mit Phosgen hergestellt werden (siehe dazu beispielsweise DE-OS 1 570 533 und US-CIP-Re 27 682).

Geeignete Verzweiger sind solche mit drei oder vier oder mehr als vier funktionellen Gruppen, insbesondere solche mit drei oder mehr als drei phenolischen Hydroxylgruppen, wobei üblicherweise 0,05 Mol-% bis 2 Mol-%, bezogen auf eingesetztes Bisphenol-A, eingesetzt werden. Einige Verzweiger sind: Phloroglucin, 4,6-Dimethyl-2,3,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan, 1,4-Bis-(4',4"-dihydroxytriphenyl)-methyl)-benzol, α,α',α"-Tris-(4-hydroxyphenyl)-1,3,5-triisopropylbenzol und insbesondere 3,3-Bis-(4-hydroxy-3-methyl-phenyl)-2-oxo-2,3-dihydroindol, 1,4-Bis-(4,4-dihydroxytriphenyl-methyl)-benzol und 3,3-Bis-(4-hydroxyphenyl)-2-oxo-2,3-dihydroindol.

Weitere mögliche Verzweiger sind 2,4-Dihydroxybenzoesäure, Trimesinsäure und Cyanurchlorid.

Geeignete Kettenabbrecher sind Monophenole wie Phenol selbst, p-tert.-Butylphenol, p-tert.-Octylphenol, p-Nonylphenol, p-Chlorphenol und p-Kresol.

Die Menge an Kettenabbrecher zur Erzielung des erfindungsgemäßen Molekulargewichtsbereichs von 27 000 bis 29 500 liegt beim Phasengrenzflächenverfahren üblicherweise bei 2-4 Mol-% Kettenabbrecher, bezogen auf Mole Bisphenol-A.

Die Bemessung der Kettenabbrechermenge erfolgt bei der Herstellung nach dem Umesterungsverfahren dadurch, daß man den Kohlensäurediester, beispielsweise Diphenylcarbonat, im Verhältnis zum Bisphenol-A in Abhängigkeit von den verwendeten Destillationskolonnen im Überschuß einsetzt (üblicherweise 102 bis 108 Mol Diphenylcarbonat pro 100 Mol Bisphenol-A).

Weitere Carbonatspender außer Diphenylcarbonat oder Phosgen sind andere Kohlensäurediester wie Dimethylcarbonat und Diethylcarbonat.

Geeignete UV-Absorber sind insbesondere solche der Formeln (I)

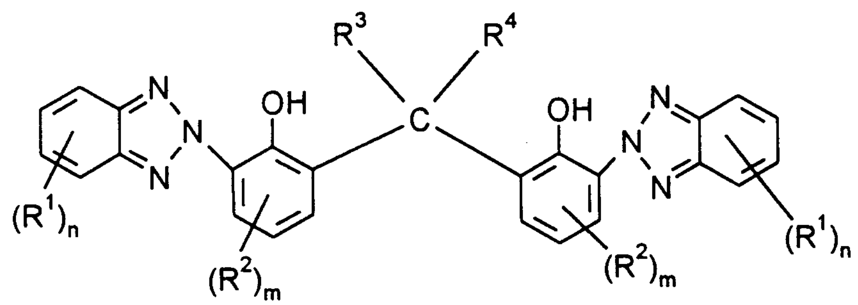

(I)

worin

| | |
|---|---|
| $R^1$ und $R^2$ | gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -O-$R^5$ oder 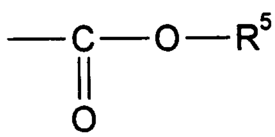 bedeuten, mit $R^5$ = H oder $C_1$-$C_4$-Alkyl, |
| $R^3$ und $R^4$ | ebenfalls gleich oder verschieden sind und H, $C_1$-$C_4$-Alkyl, $C_5$-$C_6$-Cycloalkyl, Benzyl oder $C_6$-$C_{14}$-Aryl bedeuten, |
| m | 1, 2 oder 3 ist und |
| n | 1, 2, 3 oder 4 ist, |

und (II)

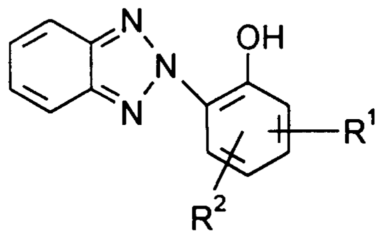

(II)

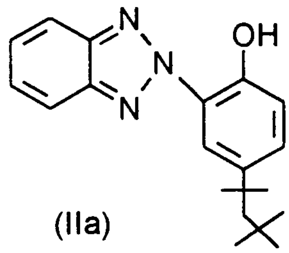

(IIa)

oder

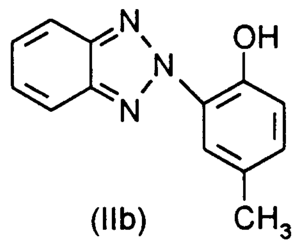

(IIb)

2-(2'-Hydroxy-4'-tert.-octylphenyl)-benzotriazol

2-(2'-Hydroxy-4'-methyl-phenyl)-benzotriazol

worin

$R^1$ und $R^2$ verschiedene oder gleiche $C_1$-$C_{15}$-Alkyl-Reste oder Aralkyl-Reste sind, wie tert.-Octyl oder Methyl.

Die Einarbeitung der UV-Absorber in die verzweigten Polycarbonate erfolgt in bekannter Weise durch Vermischen von Polycarbonatgranulat mit den UV-Absorbern und anschließende Extrusion oder durch Vermischen der Lösungen der Polycarbonate, beispielsweise in $CH_2Cl_2$, mit Lösungen der UV-Absorber, beispielsweise in Aceton, und anschließende Ausdampfung der Lösungsmittel in bekannter Weise.

Mehrschichtige Kunststofftafeln sind sowohl Massivplatten als auch insbesondere Stegdoppelplatten, wobei sowohl eine als auch beide Seiten der Kunststofftafeln mit den UV-Absorber-haltigen Schichten versehen werden können.

Die jeweilige Kernschicht der erfindungsgemäßen Kunststofftafeln kann natürlich auch eine Basismenge an UV-Stabilisator enthalten, also beispielsweise 0,1 Gew.-% bis 0,5 Gew.-%, bezogen auf das Gewicht der Kernschicht.

Die Dicke der Kunststofftafeln ergibt sich aus einer Kernschicht von 0,5 mm bis 16 mm, und mindestens einer UV-Absorber-haltigen Deckschicht von 10 µm bis 50 µm.

Die Coextrusion als solche ist literaturbekannt (siehe beispielsweise EP-110 221 und EP-110 238).

Im vorliegenden Fall wird wie folgt vorzugsweise verfahren:

An einem Coextrusionsadapter sind jeweils ein Extruder zur Erzeugung der Kernschicht und pro Deckschicht ein weiterer Extruder angeschlossen. Der Adapter ist so konstruiert, daß die die Deckschichten formenden Schmelzen als dünne Schicht haftend auf die Schmelze der Kernschicht aufgebracht wird.

Der so erzeugte, mehrschichtige Schmelzestrang wird dann in der anschließend angeschlossenen Düse in die gewünschte Form (Tafel oder Stegplatte) gebracht. Anschließend wird in bekannter Weise mittels Kalandrierung (Tafel) oder Vakuum-Kalibrierung (Stegplatte) die Schmelze unter kontrollierten Bedingungen gekühlt und anschließend abgelängt. Gegebenenfalls kann nach der Kalibrierung oder Kalandrierung ein Temperofen zur Eliminierung von Spannungen angeordnet sein.

Das erfindungsgemäße Verfahren hat somit den Vorteil, daß durch die Wahl der speziellen Reaktionsparameter, insbesondere der speziellen Molekulargewichte der verzweigten Polycarbonate, auf eine zusätzliche, UV-Absorber-freie Deckschicht verzichtet werden kann, wenn man niedermolekulare, leichtflüchtige UV-Absorber einsetzen möchte.

Das erfindungsgemäße Verfahren wird kontinuierlich mit einer Dauer von mindestens 5, vorzugsweise von mindestens 8 Stunden, durchgeführt.

Ein Meßverfahren zur Bestimmung der mechanischen Festigkeit von Stegplatten ist ein für Stegplatten adaptierter Durchstoßversuch. Hierbei wird mit einem zwischen die Stege zentrierten Falldorn, Durchmesser 5 mm, Gewicht von 36 kg, die Stegplatte durchstoßen und Kraft, Energieaufnahme und Verformung bis zum Durchstoß gemessen. Für

10 mm Stegplatten mit einer Oberfläche von 0,8 mm werden bei ausreichendem mechanischen Niveau eine Energieaufnahme von >2 J, eine Schädigungskraft von ca. 0,4 kN und eine Verformung von 9 mm gemessen. Liegt der Wert für die Energieaufnahme <2 J, so ist die mechanische Festigkeit der Stegplatte unzureichend.

Die nach dem erfindungsgemäßen Verfahren erhältlichen, mehrschichtigen Kunststofftafeln haben zudem excellente Oberflächen, die frei von Ablagerung, Ausdampfstellen oder durch Ausblühen verursachten Flecken sind.

Den erfindungsgemäß einzusetzenden verzweigten Polycarbonaten können außer den UV-Absorbern noch die üblichen Additive in den bekannten Mengen auf übliche Weise zugesetzt werden, beispielsweise andere Stabilisatoren, Fließhilfsmittel, Entformungsmittel, Flammschutzmittel, Pigmente, fein zerteilte Mineralien und anderes.

Der Zusatz dieser Stoffe erfolgt vorzugsweise auf herkömmlichen Aggregaten zum fertigen Polycarbonat.

Die nach dem erfindungsgemäßen Verfahren hergestellten Mehrschichtkunststofftafeln werden insbesondere als Verglasungs- und Bauelemente im Hausbau oder im Gartenbereich verwendet.

**Beispiele:**

**Beispiel 1**

Unter Einsatz eines verzweigten (0,3 Mol-% 3,3-Bis-(4-hydroxy-3-methyl-phenyl)-2-oxo-2,3-dihydroindol) Polycarbonats mit einer Molmasse $\overline{M}_w$ von 28 200 ($\eta_{rel}$ = 1,282) werden Stegplatten extrudiert.

Mittels Coextrusion wird eine 40 µm dicke UV-Absorber-haltige Polycarbonatschicht aus demselben verzweigten Polycarbonat aufgebracht, wobei als UV-Absorber einer der Formel (I) mit $R^1 = R^3 = R^4 = H$ und $R^2$ = tert.-Octyl benutzt wird. Die Menge beträgt 7 Gew.-%, bezogen auf das Gewicht der 40 µm dicken Deckschicht.

Als Anlage wurde ein Extruder der Fa. Reifenhäuser mit einem Schneckendurchmesser von 70 mm Entgasung verwendet. Die Coextrusion wurde mittels eines Storck-Extruders, 30 mm Schnecke durchgeführt. Die Düse hatte eine Weite von 350 mm, die Steghöhe der extrudierten Platte betrug 10 mm, der Obergurt hatte eine Dicke von 0,8 mm. Die Extrusionsparameter wurden wie folgt eingestellt:

Drehzahl: 36 min/l
Stromaufnahme: ca. 70 A
Druck von der Schnecke: 104 bar
Ausstoß: ca. 61 kg/h
Abzugsgeschwindigkeit: 1,4 m/min
Vakuumkalibrierung: -0,2 bar

Unter den so eingestellten Extrusionsbedingungen wurden 8 h UV-geschützte Stegplatten extrudiert. Die Oberfläche der Stegplatten ist excellent, ein "plate out"-Effekt ist praktisch nicht zu beobachten. Anschließend wurde die Anlage abgestellt, der Kalibrator geöffnet und der gebildete Belag gesammelt. Es wurden insgesamt 30 mg UV-Absorber isoliert.

**Vergleichsbeispiel 1**

Es wurde unter gleichen Bedingungen wie unter Beispiel 1 eine Stegplatte extrudiert, nur daß das eingesetzte verzweigte Polycarbonat eine mittlere Molmasse $\overline{M}_w$ von 31 000 ($\eta_{rel}$ = 1,310) hatte. Nach 8 h Extrusionszeit wurden jetzt aber 160 mg UV-Absorber isoliert; auf der Stegplattenoberfläche sind in geringem Umfang weiße Flecken sichtbar.

**Beispiel 2**

Beispiel 1 wurde wiederholt, wobei allerdings ein UV-Absorber der Formel (II), anstelle von (I) eingesetzt wurde, worin $R^1 = R^2 =$

$R^1 = R^2 =$ 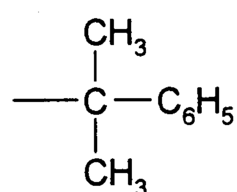 ist.

(Tinuvin 234®)

ist.
(Tinuvin 234®)
Nach 8 Stunden Extrusionszeit wurden 280 mg UV-Absorber isoliert.

**Vergleichsbeispiel 2**

Es wurde unter gleichen Bedingungen wie unter Beispiel 2 eine Stegplatte extrudiert, nur daß das eingesetzte, verzweigte Polycarbonat hatte eine mittlere Molmasse $\overline{M}_w$ von 31 000 ($\eta_{rel}$ = 1,310). Nach 8 h Extrusionszeit wurden jetzt aber 1400 mg Tinuvin 234 isoliert.

**Beispiel 3**

Beispiel 1 wurde wiederholt, wobei allerdings das verzweigte Polycarbonat eine Molmasse $\overline{M}_w$ von 29 100 ($\eta_{rel}$ 1,291) hatte.
Nach 8 Stunden Extrusionszeit wurden 50 mg UV-Absorber isoliert.

**Beispiel 4**

Beispiel 2 wurde wiederholt, wobei allerdings das verzweigte Polycarbonat eine Molmasse $\overline{M}_w$ von 29 100 ($\eta_{rel}$ 1,291) hatte.
Nach 8 Stunden Extrusionszeit wurden 320 mg UV-Absorber isoliert.

**Vergleichsbeispiel 3**

Beispiel 1 wurde wiederholt, wobei allerdings das verzweigte Polycarbonat eine Molmasse $\overline{M}_w$ von 32 100 ($\eta_{rel}$ 1,321) hatte.
Nach 8 Stunden Extrusionszeit wurden 160 mg UV-Absorber isoliert.

**Vergleichsbeispiel 4**

Es wurde unter gleichen Bedingungen wie unter Beispiel 2 eine Stegplatte extrudiert, nur das eingesetzte, verzweigte Polycarbonat hatte eine mittlere Molmasse $\overline{M}_w$ von 32 100 ($\eta_{rel}$ = 1,321).
Nach 8 Stunden Extrusionszeit wurden jetzt aber 1700 mg UV-Absorber (Tinuvin 234) isoliert.

Tabelle 1

| UV-Absorberausdampfung in Abhängigkeit von der Viskosität | | | |
|---|---|---|---|
| $\eta_{rel}$ | UV-Absorber | ausgedampfte Menge nach 8 h Extrusion | Schädigungsenergie beim Durchstoß [J] |
| 1,282 | Stab. LA 31 | 30 mg | 2,11 |
| 1,310 | Stab. LA 31 | 160 mg | 2,18 |
| 1,282 | Tin 234 | 280 mg | 2,15 |
| 1,310 | Tin 234 | 1400 mg | 2,16 |
| 1,291 | Stab. LA 31 | 50 mg | 2,13 |
| 1,291 | Tin 234 | 320 mg | 2,13 |
| 1,321 | Stab. LA 31 | 190 mg | 2,20 |
| 1,321 | Tin 234 | 1700 mg | 2,21 |

**Patentansprüche**

1. Verfahren zur Herstellung von mehrschichtigen Kunststofftafeln, durch Coextrusion von verzweigten Si-freien Polycarbonaten aus 2,2-Bis-(4-hydroxyphenyl)-propan, bestehend aus einer Kernschicht und mindestens einer Deckschicht mit einem Gehalt von 1 Gew.-% bis 15 Gew.-% an UV-Absorbern, dadurch gekennzeichnet, daß das

verzweigte Polycarbonat ein $\overline{M}_w$ von 27 000 bis 29 500 hat und daß man die Coextrusion kontinuierlich mit einer Dauer von mindestens 5 Stunden durchführt.

2. Verfahren gemäß Anspruch 1, dadurch gekennzeichnet, daß das Polycarbonat ein $\overline{M}_w$ von 28 000 bis 29 000 hat.

3. Verfahren gemäß Anspruch 1, dadurch gekennzeichnet, daß man die Coextrusion kontinuierlich mit einer Dauer von mindestens 8 Stunden durchführt.

4. Verfahren gemäß Anspruch 1, dadurch gekennzeichnet, daß man als UV-Absorber solche der Formel (I) oder (II) einsetzt

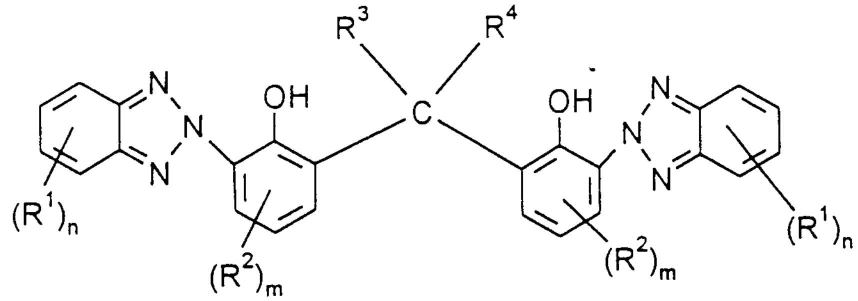

(I)

worin

$R^1$ und $R^2$ gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -O-$R^5$ oder

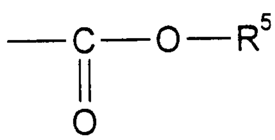

bedeuten, mit

$R^5$ = H oder $C_1$-$C_4$-Alkyl,

$R^3$ und $R^4$ ebenfalls gleich oder verschieden sind und H, $C_1$-$C_4$-Alkyl; $C_5$-$C_6$-Cycloalkyl, Benzyl oder $C_6$-$C_{14}$-Aryl bedeuten,

m 1, 2 oder 3 ist und

n 1, 2, 3 oder 4 ist,

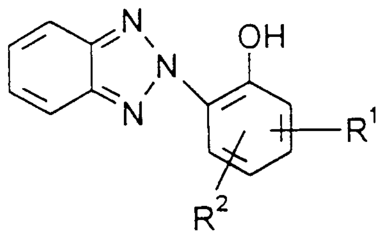

(II)

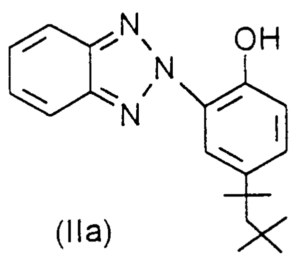

(IIa)

oder

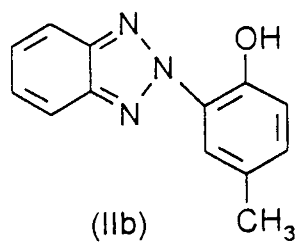

(IIb)

2-(2'-Hydroxy-4'-tert.-octylphenyl)-benzotriazol

2-(2'-Hydroxy-4'-methyl-phenyl)-benzotriazol

worin

$R^1$ und $R^2$ verschiedene oder gleiche $C_1$-$C_{15}$-Alkyl-Reste oder Aralkyl-Reste sind, wie tert.-Octyl oder Methyl.

**Claims**

1. Process for the production of multi-layer plastics sheets by coextrusion of branched, Si-free polycarbonates prepared from 2,2-bis-(4-hydroxyphenyl)propane consisting of a core layer and at least one outer layer having a content of 1 wt.% to 15 wt.% of UV absorbers, characterised in that the branched polycarbonate has an $\overline{M}_w$ of 27000 to 29500 and that coextrusion is performed continuously for a period of at least 5 hours.

2. Process according to claim 1, characterised in that the polycarbonate has an $\overline{M}_w$ of 28000 to 29000.

3. Process according to claim 1, characterised in that coextrusion is performed continuously for a period of at least 8 hours.

4. Process according to claim 1, characterised in that the UV absorbers used are those of the formula (I) or (II)

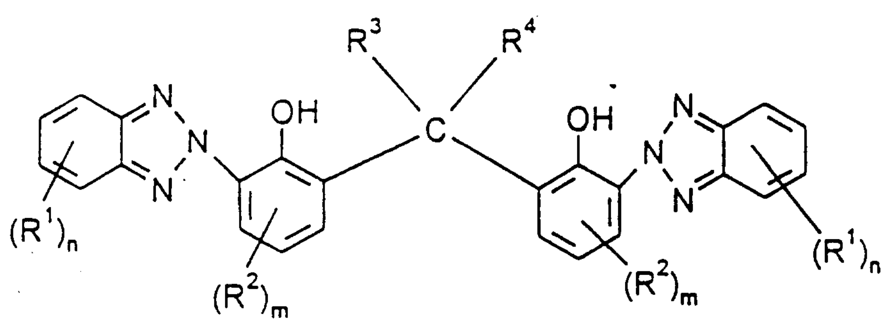

(I)

in which

$R^1$ and $R^2$ are identical or different and mean H, halogen, $C_1$-$C_{10}$ alkyl, $C_5$-$C_{10}$ cycloalkyl, $C_7$-$C_{13}$ aralkyl, $C_6$-

$C_{14}$ aryl, -O-$R^5$ or

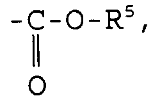

$R^5$ = H or $C_1$-$C_4$ alkyl,

$R^3$ and $R^4$ are also identical or different and mean H, $C_1$-$C_4$ alkyl, $C_5$-$C_6$ cycloalkyl, benzyl or $C_6$-$C_{14}$ aryl,

m is 1, 2 or 3 and

n is 1, 2, 3 or 4,

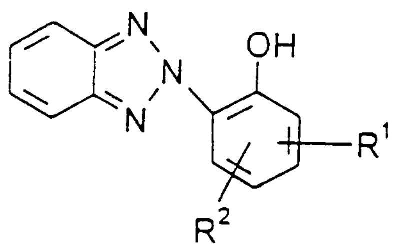

(II)

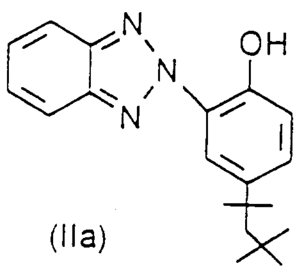

(IIa)

oder

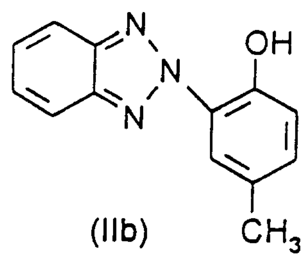

(IIb)

2-(2'-hydroxy-4'-tert.-octylphenol)benzotriazole

2-(2'-hydroxy-4'-methyl phenyl)benzotriazole

in which

$R^1$ and $R^2$ are different or identical $C_1$-$C_{15}$ alkyl residues or aralkyl residues, such as tert. -octyl or methyl.

**Revendications**

1. Procédé pour la préparation de panneaux multicouches en matière plastique par coextrusion de polycarbonates ramifiés, exempts de Si, à partir de 2,2-bis-(4-hydroxyphényl)-propane, constitués d'une couche centrale et d'au moins une couche de couverture avec une teneur de 1% en poids à 15% en poids d'absorbants UV, caractérisé en ce que le polycarbonate ramifié présente un $\overline{M}_w$ de 27 000 à 29 500 et en ce que la coextrusion est réalisée en continu sur une durée d'au moins 5 heures.

2. Procédé selon la revendication 1, caractérisé en ce que le polycarbonate présente un $\overline{M}_w$ de 28 000 à 29 000.

3. Procédé selon la revendication 1, caractérisé en ce que la coextrusion est réalisée en continu sur une durée d'au moins 8 heures.

4. Procédé selon la revendication 1, caractérisé en ce que l'on utilise comme absorbant UV ceux de la formule (I) ou (II)

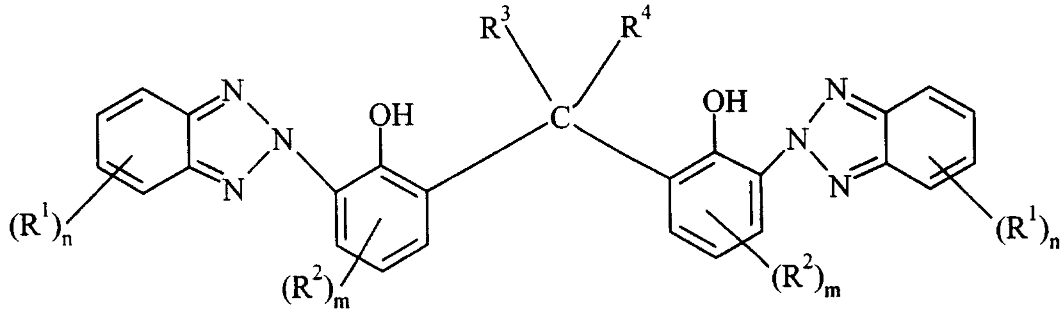

(I),

dans laquelle

$R^1$ et $R^2$ sont identiques ou différents et représentent un atome de H, un atome d'halogène, un groupe alkyle en $C_1$-$C_{10}$, cycloalkyle en $C_5$-$C_{10}$, aralkyle en $C_7$-$C_{13}$, aryle en $C_6$-$C_{14}$, -O-$R^5$ ou

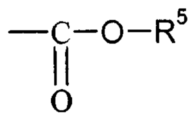

avec,

$R^5$ = H ou un groupe alkyle en $C_1$-$C_4$,

$R^3$ et $R^4$ sont également identiques ou différents et représentent un atome de H, un groupe alkyle en $C_1$-$C_4$, cycloalkyle en $C_5$-$C_6$, benzyle ou aryle en $C_6$-$C_{14}$,

m est égal à 1, 2 ou 3 et

n est égal à 1, 2, 3 ou 4 et,

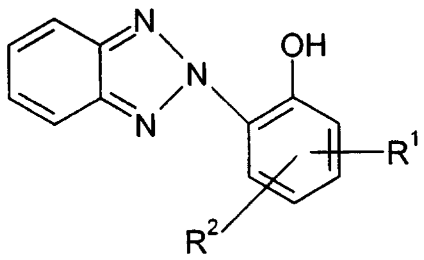

(II)

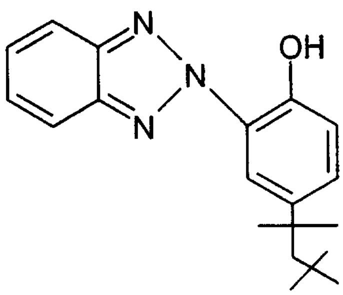

OU

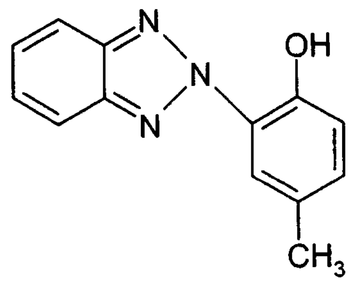

(IIa)

(IIb)

2-(2'-hydroxy-4'-tert.-octylphényl)-benzotriazol

2-(2'-hydroxy-4'-méthyl-phényl)-benzotriazol

dans laquelle

$R^1$ et $R^2$ sont identiques ou différents et sont des restes alkyle ou des restes aralkyle en $C_1$-$C_{15}$, comme le groupe tert.-octyle ou méthyle.

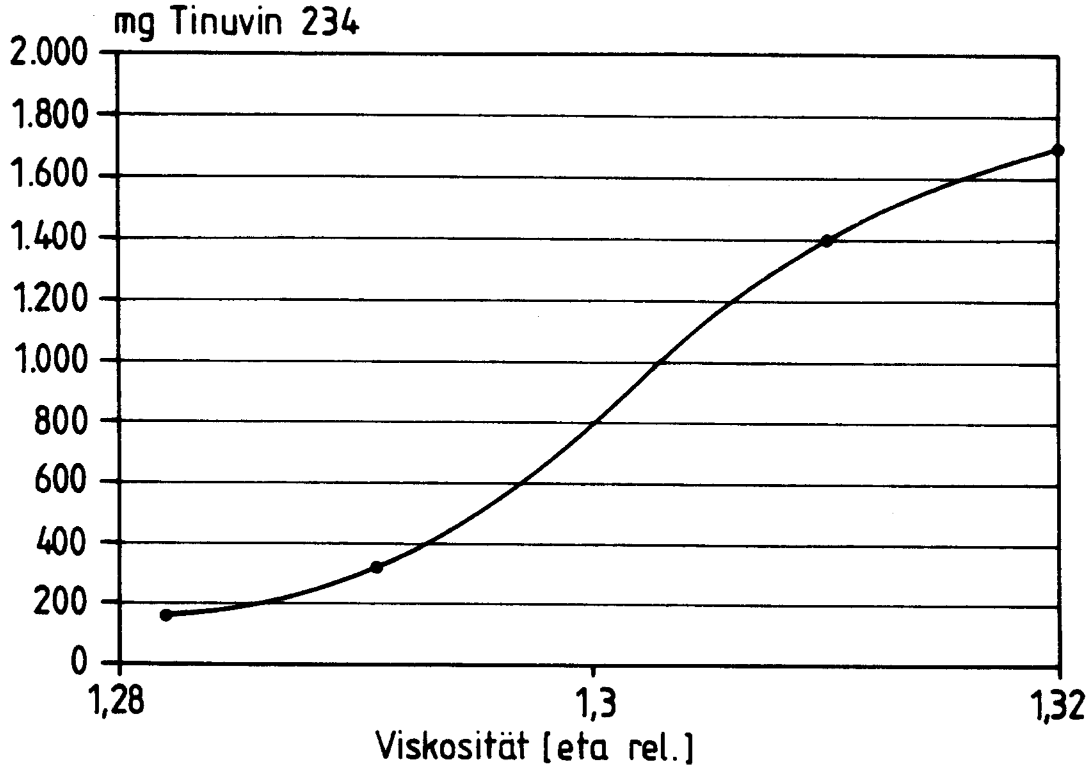
mg Tinuvin 234
2.000
1.800
1.600
1.400
1.200
1.000
800
600
400
200
0
1,28
1,3
1,32
Viskosität [eta rel.]

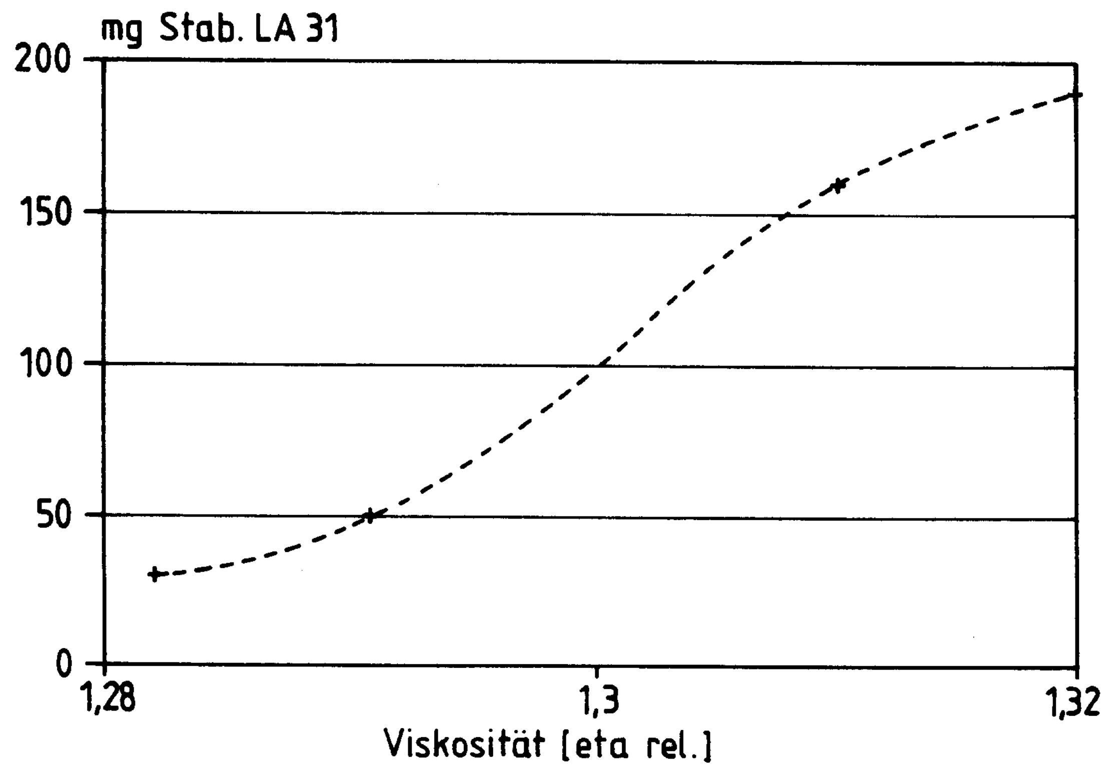
mg Stab. LA 31
200
150
100
50
0
1,28
1,3
1,32
Viskosität [eta rel.]